# EUROPÄISCHE PATENTANMELDUNG

(11) **EP 2 146 067 A1**
(43) Veröffentlichungstag der Anmeldung: **20.01.2010**
(21) Anmeldenummer: 09100280.8
(22) Anmeldetag: 14.05.2009
(51) Int. Cl.: F01N 11/00, F01N 3/20, G01F 23/26, G01N 27/22

(54) **Abgasnachbehandlungseinrichtung für eine Brennkraftmaschine mit SCR-Katalysator und Verfahren zum Betreiben einer Abgasnachbehandlungseinrichtung**

(30) Priorität: 14.07.2008 DE 102008040385
(71) Anmelder: Robert Bosch GmbH, 70442 Stuttgart (DE)
(72) Erfinder: Arndt, Michael, 72762 Reutlingen (DE); Leonhart, Thomas, 72070 Tuebingen (DE); Stammler, Jochen, 72070 Tuebingen (DE); Niemann, Markus, 66701 Beckingen (DE)

(57) **Zusammenfassung**

Es werden eine Abgasnachbehandlungseinrichtung (3) und ein Verfahren zum Erkennen einer Fehlbetankung eines Tanks (19) für Harnstoffwasserlösung bei einer Abgasnachbehandlungseinrichtung (3) mit SCR-Katalysator (11) vorgeschlagen.

## Beschreibung

### Stand der Technik

Die immer schärfer werdenden NOx-Emissionsgrenzwerte erfordern bei Fahrzeugen mit einem Dieselmotor oder einem Ottomotor, der zeitweise überstöchiometrisch ( > 1) betrieben wird, ab einem bestimmten Fahrzeuggewicht eine die Stickoxide reduzierende Abgasnachbehandlung. Eine aus dem Stand der Technik bekannte, sehr wirksame Abgasnachbehandlung ist die sogenannte selektive katalytische Reaktion (SCR). Dabei wird ein flüssiges Reduktionsmittel, nämlich Ammoniak, das aus Harnstoff erzeugt wurde, bei Bedarf in die Abgasnachbehandlungseinrichtung der Brennkraftmaschine eingedüst und reagiert in einem speziellen Katalysator zusammen mit den Stickoxiden der Abgase zu den unschädlichen Verbindungen Stickstoff und Wasser. Exemplarisch für eine solche SCR-Abgasnachbehandlung mit flüssigem Reduktionsmittel sei an dieser Stelle auf die EP 1 422 395 A2 verwiesen.

Der dazu erforderliche Harnstoff wird in Form einer wässrigen Lösung, die 32,5 Gewichts-% Harnstoff enthält, direkt in das Abgasrohr der Brennkraftmaschine eingespritzt. Im Zusammenhang mit der Erfindung wird stets von flüssigem Reduktionsmittel gesprochen, da die Erfindung nicht auf die oben genannte Harnstoff-Wasser-Lösung als Reduktionsmittel beschränkt ist.

Das zur selektiven katalytischen Reaktion erforderliche flüssige Reduktionsmittel wird in einem separaten Tank in dem Kraftfahrzeug mitgeführt. Es haben sich in der Praxis Fälle ergeben, in denen versehentlich Dieselkraftstoff in den eigentlich für das Reduktionsmittel vorgesehenen Zusatztank gefüllt wurde. Dies führt je nach Konzentration des Dieselkraftstoffs zu einer Störung der Abgasnachbehandlungseinrichtung. Insbesondere hat sich bei Versuchen herausgestellt, dass die Dichtungen, die gegen Harnstoffwasserlösung resistent sind, durch Dieselkraftstoff aufquellen. In Folge dessen wird die Abgasnachbehandlungseinrichtung funktionsunfähig.

### Offenbarung der Erfindung

Der Erfindung liegt die Aufgabe zugrunde, eine Falschbetankung des Zusatztanks für die Harnstoff-Wasser-Lösung mit Kraftstoff zu erkennen und dadurch Folgeschäden an der Abgasnachbehandlungseinrichtung zu vermeiden.

Diese Aufgabe wird erfindungsgemäß bei einer Abgasnachbehandlungseinrichtung für eine Brennkraftmaschine mit einem SCR-Katalysator, wobei die Abgasnachbehandlungseinrichtung einen Tank für ein flüssiges Reduktionsmittel und einen Injektor zum Einspritzen des Reduktionsmittels in ein Abgasrohr der Brennkraftmaschine umfasst, dadurch gelöst, dass in der Abgasnachbehandlungseinrichtung ein Referenzkondensator mit einer ersten Elektrode und einer zweiten Elektrode vorhanden ist, und wobei das Reduktionsmittel als Dielektrikum des Referenzkondensators dient.

Die Erfindung macht sich die Erkenntnis zunutze, dass sich die Permittivität εᵣ von einer Harnstoffwasserlösung und die Permittivität von Dieselkraftstoff stark voneinander unterscheiden. Da die Permittivität des Dielektrikums die Kapazität des Referenzkondensators beeinflusst, ist es möglich, über die Kapazität des Referenzkondensators eine Falschbetankung des Tanks für das flüssige Reduktionsmittel sicher zu erkennen.

In weiterer vorteilhafter Ausgestaltung der Erfindung ist der Referenzkondensator in dem Tank angeordnet und wirkt mit einem im Tank angeordneten Füllstandsensor zusammen. Dadurch kann der Referenzkondensator nicht nur zur Erkennung einer Falschbetankung des Tanks für das flüssige Reduktionsmittel eingesetzt werden, sondern er kann auch noch Schwankungen in der Permittivitätszahl von Harnstoff-Wasser-Lösung, die, je nach Alter und Konzentration des Harnstoffs Werte zwischen 90 und 105 annimmt, kompensieren. Dadurch wird die Füllstandserfassung durch einen nach kapazitiven Füllstandssensor genauer, da die im Wesentlichen alterungsbedingten Schwankungen der Permittivität kompensiert werden können.

Die eingangs genannte Aufgabe wird ebenfalls gelöst durch ein Verfahren zum Erkennen einer Fehlbetankung eines Tanks einer Abgasnachbehandlungseinrichtung für eine Brennkraftmaschine mit einem SCR-Katalysator, wobei die Abgasnachbehandlungseinrichtung einen Referenzkondensator umfasst, dadurch gelöst, dass die Kapazität Cᵣ des Referenzkondensators regelmäßig mit einem ersten Schwellwert verglichen wird, und dass eine Fehlbetankung erkannt wird, wenn die Kapazität des Referenzkondensators kleiner als der erste Schwellwert ist.

Das erfindungsgemäße Verfahren macht sich die Tatsache zunutze, dass sich die Kapazität des Referenzkondensators signifikant ändert, wenn anstelle von Harnstoff-Wasser-Lösung versehentlich Dieselkraftstoff in den Zusatztank eingefüllt wird. Die Permittivitätszahl von Dieselkraftstoff beträgt etwa 2, während die Permittivitätszahl einer Harnstoff-Wasser-Lösung größer als 90 ist. Durch Vergleichen der Kapazität des Referenzkondensators mit einem ersten Schwellwert SW₁ können somit auf einfache und zuverlässige Weise Fehlbetankungen sicher erkannt werden.

In weiterer vorteilhafter Ausgestaltung der Erfindung kann Das erfindungsgemäße Verfahren macht sich die Tatsache zunutze, dass sich die Kapazität des Referenzkondensators mit einem zweiten Schwellwert SW₂, der niedriger als der erste Schwellwert SW₁ liegt, kann erkannt werden, ob der tank vollständig entleert wurde und in Folge dessen Luft zwischen den Elektroden des Kondensators vorhanden ist. Die Permittivitätszahl von Luft beträgt etwa 1, so dass sich in diesem Fall eine charakteristische Änderung der Kapazität des Referenzkondensators einstellt.

Um die Abgasnachbehandlungseinrichtung über die gesamte Lebensdauer vor aus einer Fehlbetankung resultierenden Schäden zu schützen, ist in weiterer vorteilhafter Ausgestaltung des erfindungsgemäßen Verfahrens vorgesehen, die Kapazität des Referenzkondensators in vorgegebenen zeitlichen Abständen, nach einer vorgegebenen Betriebsdauer der Brennkraftmaschine und/oder nach dem Erkennen eines Tankvorgangs, insbesondere des Tanks der Abgasnachbehandlungseinrichtung, mit dem ersten Schwellwert zu vergleichen.

In weiterer vorteilhafter Ausgestaltung der Erfindung ist vorgesehen, nach dem Erkennen einer Fehlbetankung ein Warnsignal, insbesondere ein optisches und/oder akustisches Warnsignal, auszugeben.

Desweiteren kann eine Fehlermeldung in einem Fehlerspeicher eines Motorsteuergeräts abgespeichert werden, wenn eine Fehlbetankung erkannt wurde.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: den schematischen Aufbau einer erfindungsgemäßen Abgasnachbehandlungseinrichtung; und
- Figur 2: ein Ausführungsbeispiel eines erfindungsgemäßen Referenzkondensators und
- Figur 3: ein Ablaufprogramm des erfindungsgemäßen Verfahrens.

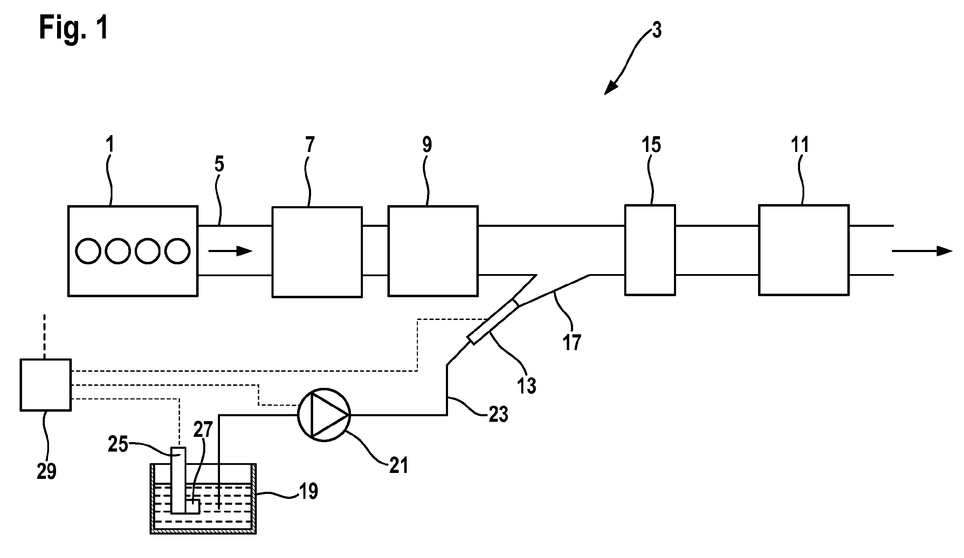

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7, einen Partikelfilter 9 und einen SCR-Katalysator 11. Die Strömungsrichtung des Abgases durch das Abgasrohr 5 ist durch Pfeile (ohne Bezugszeichen) angedeutet.

Um den SCR-Katalysator 11 mit Reduktionsmittel zu versorgen, sind stromaufwärts des SCR-Katalysators 11 ein Injektor 13 für das Reduktionsmittel und ein Mischer 15 angeordnet. Der Injektor 13 ist an einem Stutzen 17 des Abgasrohrs 5 befestigt.

Der Injektor 13 wird aus einem Tank 19 mittels einer elektrischen Förderpumpe21 über eine Leitung 23 mit Reduktionsmittel versorgt und spritzt dieses bei Bedarf oberhalb des Mischers 15 in das Abgasrohr 5 ein.

In dem Tank 19 sind ein kapazitiver Füllstandssensor 25 und ein Referenzkondensator 27 angeordnet. Sowohl der Füllstandssensor 25 als auch der Referenzkondensator 27 sind nur schematisch angedeutet.

Wie aus Figur 1 ersichtlich, ist des weiteren ein Steuergerät 29 vorhanden, welches neben der nicht dargestellten Brennkraftmaschine 1 über Signalleitungen mit dem Füllstandssensor 25, dem Referenzkondensator 27, der Förderpumpe 21 und dem Injektor 13 verbunden ist.

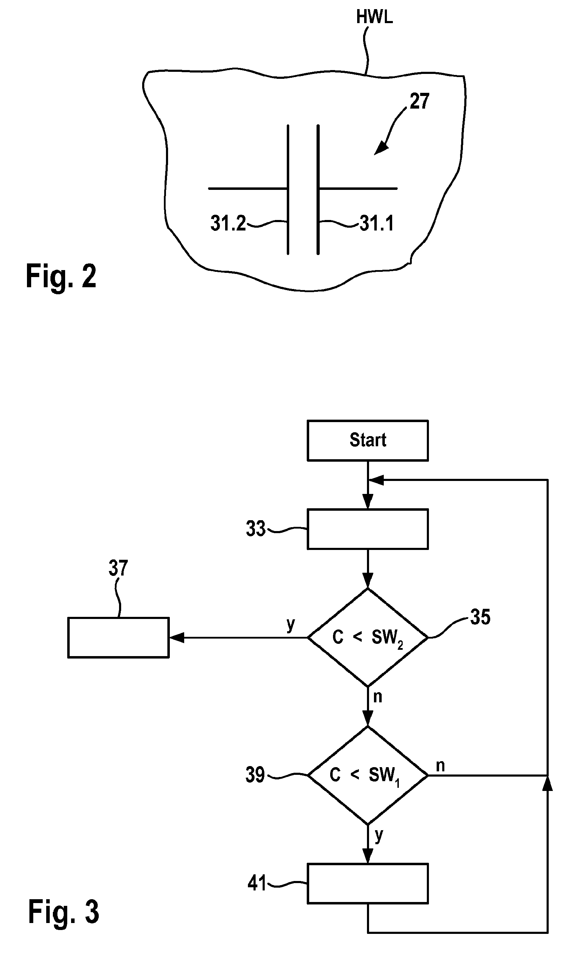

In Figur 2 ist ein Ausführungsbeispiel des Referenzkondensators 27 stark vereinfacht dargestellt. Der Referenzkondensator 27 umfasst eine erste Platte 31.1 und eine zweite Platte 31.2. Die Platten 31.1 und 31.2 sind über die in Figur 2 nicht dargestellten Signalleitungen mit dem Steuergerät 29 verbunden sind. Wie aus der lediglich schematisch dargestellte Referenzkondensator 27 ist vollständig von der Harnstoffwasserlösung HWL umgeben, die als Dielektrikum wirkt. Dies bedeutet, dass auch zwischen den Platten 31.1 und 31.2 des Referenzkondensators 27 die Harnstoffwasserlösung mit ihrer Permittivität von > 90 vorhanden ist. Entsprechend groß ist die Kapazität des Referenzkondensators 27, wenn sich im Tank 19 (siehe Figur 1) die vorgesehene Harnstoffwasserstofflösung befindet.

Wenn nun versehentlich Dieselkraftstoff in den Tank 19 eingeführt wird, befindet sich zwischen den Platten 31.1 und 31.2 entweder reiner Dieselkraftstoff oder eine Mischung aus Dieselkraftstoff und Harnstoffwasserlösung. Dieselkraftstoff hat eine Permittivitätszahl von etwa 2, so dass sich schon bei einer Mischung zwischen Harnstoffwasserlösung und Dieselkraftstoff eine deutliche Absenkung der Permittivitätszahl des im Tank 19 befindlichen Fluids einstellt. Infolgedessen ändert sich auch die Kapazität C des Referenzkondensators 27 signifikant. Diese Änderung der Kapazität C des Referenzkondensators 27 wird erfindungsgemäß herangezogen, um Fehlbetankungen des Tanks 19 zu detektieren.

Der Füllstandssensor 25 ist im Wesentlichen wie andere aus dem Stand der Technik bekannte kapazitive Füllstandssensoren aufgebaut. Für die beanspruchte Erfindung, nämlich die Erkennung von Fehlbetankungen des Tanks 19 ist die Funktion des Füllstandssensors 25 ohne Bedeutung.

In Figur 3 ist ein Ablaufdiagramm des erfindungsgemäßen Verfahrens dargestellt. Nach einem Start wird in einem ersten Funktionsblock 33 die Kapazität C des Referenzkondensators 27 ermittelt. Die Ermittlung der Kapazität eines Kondensators ist jedem Fachmann geläufig, so dass eine explizite Beschreibung im Zusammenhang mit der Erfindung entbehrlich ist.

Darauf wird in einem weiteren Block 35 abgefragt, ob die Kapazität C kleiner als ein zweiter Schwellwert SW₂ ist. Wenn die Kapazität C des Referenzkondensators 27 kleiner als der zweite Schwellwert SW₂ ist, dann befindet sich kein Dielektrikum zwischen den Platte 31.1 und 31.2 des Referenzkondensators 27. In anderen Worten: Der Tank 19 ist vollständig leer. In einem zweiten Funktionsblock 37 wird eine Fehlermeldung erzeugt und ausgegeben, sowie in einem Steuergerät 29 abgespeichert.

Wenn die Kapazität C größer oder gleich dem zweiten Schwellwert SW₂ ist verzweigt das verfahren zu einer weiteren Abfrage 39. Wenn die Kapazität C des Referenzkondensators 27 kleiner als der erste Schwellwert SW₁ ist (mit: SW₂ < SW₁), dann befindet sich Dieselkraftstofff im Tank 19 und es wird in einem im dritten Funktionsblock 41 eine Fehlermeldung erzeugt, ein entsprechendes optisches und/oder akustisches Signal ausgegeben und in einem Steuergerät 29 abgespeichert.

Wenn die Abfrage 39 negativ ist, verzweigt das erfindungsgemäße Verfahren wieder vor den ersten Funktionsblock 33.

Das Verfahren kann in regelmäßigen zeitlichen Abständen oder nach dem einrtreten betimmter Ereignisse wiederholt werden. So kann zum Beispiel nach einer bestimmten Betriebsdauer der Brennkraftmaschine und/oder nach jedem Tankvorgang das erfindungsgemäße Verfahren durchgeführt werden.

## Patentansprüche

1. Abgasnachbehandlungseinrichtung für eine Brennkraftmaschine mit einem SCR-Katalysator (11), wobei die Abgasnachbehandlungseinrichtung einen Tank (19) für einen flüssiges Reduktionsmittel (HWOL) und einen Injektor (13) zum Einspritzen des Reduktionsmittels in ein Abgasrohr (5) der Brennkraftmaschine 0 umfasst, **dadurch gekennzeichnet, dass** in der Abgasnachbehandlungseinrichtung ein Referenz-Kondensator (27) mit einer ersten Platte (31.1) und einer zweiten Platte (31.2) vorhanden ist, und wobei das Reduktionsmittel (HWL) als Dielektrikum des Referenz-Kondensators (27) dient.

2. Abgasnachbehandlungseinrichtung nach Anspruch 1, **dadurch gekennzeichnet, dass** der Referenz-Kondensator (27) mit einem im Tank (19) angeordneten Füllstandssensor (25) zusammenwirkt.

3. Abgasnachbehandlungseinrichtung nach Anspruch 1 oder 2, **dadurch gekennzeichnet, dass** der Füllstandssensor (27) als kapazitiver Füllstandssensor ausgebildet ist, und dass sich eine Kapazität (C) des Füllstandssensors (25) in Abhängigkeit der Füllhöhe des im Tank (19) befindlichen Reduktionsmittels (HWL) ändert.

4. Verfahren zum Erkennen einer Fehlbetankung eines Tanks (19) einer Abgasnachbehandlungseinrichtung für eine Brennkraftmaschine mit einem SCR-Katalysator (11), wobei die Abgasnachbehandlungseinrichtung einen Referenz-Kondensator (27) umfasst, **dadurch gekennzeichnet, dass** die Kapazität (C) des Referenzkondensators (27) regelmäßig mit einem ersten Schwellwert (SW₁) verglichen wird, und dass eine Fehlbetankung erkannt wird, wenn die Kapazität (C) des Referenzkondensators (27) kleiner als der erste Schwellwert (SW₁) ist.

5. Verfahren nach Anspruch 4, **dadurch gekennzeichnet, dass** die Kapazität (C) des Referenzkondensators (27) in vorgegebenen zeitlichen Abständen, nach einer vorgegebenen Betriebsdauer der Brennkraftmaschine und/oder nach dem erkennen eines Tankvorgangs, insbesondere des Tanks (19) der Abgasnachbehandlungseinrichtung, mit dem ersten Schwellwert (SW₁) verglichen wird.

6. Verfahren nach Anspruch 4 oder 5, **dadurch gekennzeichnet, dass** ein Warnsignal, insbesondere ein optisches und/oder ein akustisches Warnsignal, ausgegeben wird, wenn eine Fehlbetankung erkannt wird.

7. Verfahren nach einem der Ansprüche 4 bis 6, **dadurch gekennzeichnet, dass** eine Fehlermeldung in einem Fehlerspeicher eines Steuergeräts (15) abgespeichert wird.

8. Computerprogramm für ein Steuergerät (15) einer Brennkraftmaschine (1), **dadurch gekennzeichnet, dass** es ein Verfahren nach einem der vorhergehenden Ansprüche durchführt, wenn es abgearbeitet wird.

9. Steuergerät für eine Brennkraftmaschine (1), **dadurch gekennzeichnet, dass** es nach einem der vorstehend beanspruchten Verfahren arbeitet.
